# EUROPEAN PATENT SPECIFICATION

(11) **EP 3 970 893 B1**
(45) Date of publication and mention of the grant of the patent: **08.01.2025**
(21) Application number: 20196893.0
(22) Date of filing: 18.09.2020
(51) Int. Cl.: B23H 3/04, B23H 9/10

(54) **ELECTROCHEMICAL MACHINING ELECTRODE DEVICE FOR REALIZING A COOLING SLOT IN A BLADE OF A GAS TURBINE ASSEMBLY AND METHOD FOR REALIZING A COOLING SLOT IN A BLADE OF A GAS TURBINE ASSEMBLY USING THIS ELECTROCHEMICAL MACHINING ELECTRODE DEVICE**
ELEKTROCHEMISCHE BEARBEITUNGSELEKTRODENVORRICHTUNG ZUR REALISIERUNG EINES KÜHLSCHLITZES IN EINER SCHAUFEL EINER GASTURBINENANORDNUNG UND VERFAHREN ZUR REALISIERUNG EINES KÜHLSCHLITZES IN EINER SCHAUFEL EINER GASTURBINENANORDNUNG MIT DIESER ELEKTROCHEMISCHEN BEARBEITUNGSELEKTRODENVORRICHTUNG
DISPOSITIF D'USINAGE ÉLECTROCHIMIQUE À ÉLECTRODE POUR RÉALISER UNE FENTE DE REFROIDISSEMENT DANS UNE PALE D'UN ENSEMBLE TURBINE À GAZ ET PROCÉDÉ DE FABRICATION D'UNE FENTE DE REFROIDISSEMENT DANS UNE PALE D'UN ENSEMBLE TURBINE À GAZ AU MOYEN DE CE DISPOSITIF D'USINAGE ÉLECTROCHIMIQUE À ÉLECTRODE

(43) Date of publication of application: 23.03.2022
(73) Proprietor: Ansaldo Energia Switzerland AG, 5400 Baden (CH)
(72) Inventor: BALLIEL, Martin, 5400 BADEN (CH)
(74) Representative: Studio Torta S.p.A.

(56) References cited:
- DE-B- 1 237 713
- US-A- 3 427 239
- US-A1- 2011 186 550

## Description

### Field of the Invention

The present invention relates to the technical field of gas turbine assemblies. These gas turbines may be used in power plants or in aero engines such as turboprops, thrust generators or turbofans. As known, in a gas turbine assembly for power plants (in the following only gas turbine) an incoming air flow is compressed in a compressor and then mixed with fuel and ignited in a combustor to produce a hot gas flow to be expanded in a turbine for generating a rotating work on a rotor in turn connected to a generator. A gas turbine in an aero engine is configured for driving fan or propeller blades and/or providing thrust by emitting hot gas at the exhaust. Due to the very high temperature of the working hot gas, some components of a gas turbine have to be cooled and therefore beside of the main hot gas flow also a cooling flow (usually cooling air as part of the compressed air) is circulating inside the gas turbine. In this technical field, the present invention, in detail, refers to a device for realizing a cooling slot in blade surface of a gas turbine assembly wherein this slot is fed by cooling air passing inside the blade.

### Description of prior art

As known, a gas turbine for power plants comprises a compressor assembly, a combustor assembly and a turbine assembly. The compressor assembly is configured for compressing incoming air supplied at a compressor inlet. The compressed air leaving the compressor assembly flows into a volume (called "plenum") and from there into the combustor assembly. This combustor assembly comprises usually a plurality of burners configured for injecting fuel (at least one type of fuel) into the compressed air flow. The mixture of fuel and compressed air enters a combustion chamber where this mixture ignites. The resulting hot gas flow leaves the combustion chamber and by passing in the turbine assembly performs a rotating work on the rotor connected to a generator. As known, the turbine assembly comprises a plurality of stages, or rows, of rotating blades that are interposed by a plurality of stages, or rows, of stator blades, called vanes. The rotating blades are supported by the rotor whereas the stator blades are supported by a casing (called "vane carrier") that is concentric and surrounding the turbine assembly.

In order to achieve a high efficiency, the hot gas flow has to have a very high turbine inlet temperature. However, in general this high temperature involves an undesired high NOx emission level. In order to reduce this emission and to increase operational flexibility without decreasing the efficiency, a so called "sequential" gas turbine is particularly suitable. In general, a sequential gas turbine comprises a first and a second combustion stage wherein each combustion stage is provided with a plurality of burners. Today at least two different kinds of sequential gas turbines are known. According to a first embodiment, the first and the second combustor are annular shaped and are physically separated by a stage of turbine blades, called high pressure turbine. Downstream the second combustor a second turbine unit is present (called low pressure turbine). This kind of gas turbine is produced by the Applicant and is available on the market as "GT26". According to a second embodiment of a sequential gas turbine, the gas turbine is not provided with the high-pressure turbine and the combustor assembly is realized in form of a plurality of can-combustors arranged as a ring around the gas turbine axis. Each can-combustor comprises a first combustor and a second combustor arranged directly one downstream the other inside a common can shaped casing. This second kind of a sequential gas turbine is produced by the Applicant and is available on the market as "GT36". The present invention (i.e. a new and inventive electrochemical machining electrode device for realizing a cooling slot in a blade surface of a gas turbine assembly as will be described in the following) can be applied in all foregoing described gas turbines. The invention can also be applied in turbine assemblies of aero engines as turbofan, turboprop or turbojet which drive fan or propeller blades and/or provide thrust by emitting hot gas at the exhaust. Moreover, the present invention can be applied not only for realizing a cooling slot in a blade surface but in any gas turbine surfaces to be cooled.

According to the invention, for cooling slot we mean a recessed portion slot-shaped obtained in a surface wherein this recessed portion is in connection with cooling air fed inside the body. Moreover, the connection between the recessed portion and the cooling air is obtained by providing a plurality of channels or holes connecting a cooling air source (inside the body) to the recessed slot-shaped portion and allows passage of a fluid therethrough.

According to the prior art today the method for realizing the above cooling slot comprises the following steps. The first step consists in realizing the recessed portion slot-shaped by a machining tool, e.g. by die sink electrodischarge machining (EDM), which is a relatively slow process with a high wear of complex-shaped electrodes (e.g. a new electrode or extensive electrode rework may be required to produce only one recessed portion of the slot) and therefore expensive. Also other machining processes are relatively slow and therefore expensive, e.g. Laser ablation or milling, while milling of typical turbine blading materials, Nickel or Cobalt base superalloys, has a high tool wear which adds further cost. After that the method comprises the step of using an electrochemical machining (ECM) or electrodischarge machining (EDM) electrode device in form of a hollow tube (known as 'STEM drilling' (ECM) or fast hole drilling (EDM)) for producing the channels or holes connecting the cooling air source to the recessed portion slot-shaped. The second step requires alignment with the first step, however will inevitably not be perfectly aligned due to manufacturing tolerances and therefore cause an undesired impact on cooling air flow and may reduce component life time due to an undesired and variable shape at the interface between first and second steps.

Alternatively, according to the prior art today another method for realizing the above cooling slot comprises the following single step. The step consists in realizing the recessed portion slot-shaped and channels or holes connecting the cooling air source to the recessed portion slot-shaped by die sink electrodischarge machining, which is a relatively slow process with a high wear of complex-shaped electrodes (e.g. a new electrode may be required to produce only one slot) and therefore expensive.
Starting from this prior art practice, today there is the need to provide a new method and a new device for realizing a cooling slot in a surface of a blade of a gas turbine assembly.

US3427239 refers to a tool electrode for use in the electro-chemical machining process, wherein the device is configured for producing smoothly machined surfaces on through holes.

### Disclosure of the invention

Accordingly, a primary object of the present invention is to provide an electrochemical machining electrode device for realizing a cooling slot in a surface of a body to be cooled (preferably a blade) of a gas turbine assembly for power plants or for aero engines.

According to the invention, a gas turbine assembly as foregoing described, is an assembly comprising:
- a compressor;
- at least a combustor;
- at least a turbine;
wherein some components of these sub-assemblies need to be cooled by providing in the relative surface cooling slots connected to a cooling air source. For instance, today it is known to provide the turbine blades with these cooling slots.

According to the invention, the new claimed device is configured to realize both the recessed portion slot-shaped and the channels or holes connecting the slot to the air source inside the blade.

In particular, the claimed device is a sandwich or essentially a two dimensional multi-layer body comprising:
- two outer electrically non-conducting plates;
- two inner electrically conducting plates in direct contact with the two outer non-conducting plates wherein the two inner electrically conducting plates are spaced for forming a central gap used to provide a flow of fresh electrolyte to the surface to be machined; the inner electrically conducting plates additionally serve as a cathode providing current from an electrical current source to the surface to be machined, which is used as anode and also connected to the electrical current source;
- a plurality of bridge bodies connecting the two inner electrically conducting plates.

The device is comb-shaped and comprises a base and a plurality of tubes connected to the base wherein the base is open and the tubes are hollow each comprising of an outer electrically non-conducting tube in direct contact with an inner electrically conducting tube for forming a plurality of passing channels allowing the electrolyte to enter the device by the base and to leave the device by the tubes; each inner electrically conducting tube additionally serves as a cathode providing current via the inner electrically conducting plates from an electrical current source to the surface to be machined, which is used as anode and also connected to the electrical current source.

Preferably, each tube is connected to the base by a tapered portion so that the passing channel for the electrolyte decreases from the base to the tube.

Preferably, the tapered portions connecting the base to the tubes are laterally open in order to allow electrolyte to leave the device by the tapered portions and provide the slot with diffusor portions connecting the channel or holes to the recessed portion.

Preferably, base is laterally closed. In this case the lateral edges of the recessed portion are well defined and electrolyte loss to the lateral edges is avoided. Alternatively, only the portion of the base adjacent to the electrolyte inlet is laterally closed, while a portion of the base adjacent to the tapered portions is laterally open.

Preferably, the bridge bodies are pedestals and/or electrolyte flow guides configured for guiding the electrolyte flowing from the base to the tubes and to the laterally open tapered portions. Within the tapered portions the flow guides essentially divide the central gap space by either closed walls or partially open walls to provide electrolyte flow separately to each of the tubes and to the open edges of the tapered portions.

Preferably, the outer plates are made of glass or plastic. Preferably, the inner plates are made by stainless steel or copper or metal.

Preferably, the bridge bodies and the inner plates are made of the same conducting material (to avoid a corrosive electrochemical reaction between the inner plates and the bridge bodies), however may be made of different conducting materials. Alternatively, the bridge bodies may be made of a non-conducting material.

The method for realizing a cooling slot in a surface of a body, preferably a blade, of a gas turbine assembly by using the new claimed device is quite simple. The method comprises the steps of:
a) providing a body, preferably a blade, of the gas turbine assembly;
b) providing a device according to the invention;
c) coupling the device to the body surface so that the tubes are towards the body surface;
d) connecting the inner electrically conducting plates of the device to an electrical current generator, which uses the plates as cathode and the body as anode, and flowing the electrolyte inside the base of the device towards the body surface;
e) lowering step by step or continuously the device inside the surface during the production of the slot until the desired depth has been reached and the cooling air can flow from the source inside the body to the slot.

It shall be noted that the device according to the invention is essentially not worn or consumed during the process and can be re-used to machine a large number of slots.

It being understood that both the foregoing general description and the following detailed description are exemplary and are intended to provide further explanation of the invention as claimed. Other advantages and features of the invention will be apparent from the following description, drawings and claims.

The features of the invention believed to be novel are set forth with particularity in the appended claims.

### Brief description of drawings

Further benefits and advantages of the present invention will be evident after a careful reading of the detailed description with appropriate reference to the annexed drawings.

The invention itself, however, may be better understood by referring to the following detailed description of the invention, which describes an exemplary embodiment of the invention, taken in conjunction with the annexed drawings, in which:
- figure 1 is a schematic front view which also shows internal flow guides/flow blockers of an example of an electrochemical machining electrode device according to the present invention;
- figure 2 is a schematic side view of the device of figure 1 along the arrow II;
- figure 3 is a schematic sectional view of the device of figure 1 along the line III-III;
- figure 4 is a schematic view along the device's movement direction onto the cooling slot obtained by using device of figure 1; note that the device's movement direction may be normal to the surface of the work piece or at an inclined angle depending on the intended exit direction of the cooling air film, so the depth to be machined is increased compared to machining normal to the surface, e.g. for an angle of 45° the depth is increased by a factor √2 (square root of 2, approx. 1,41);
- figure 5 schematic sectional view of the slot of figure 4 along the line V-V.

### Detailed description of preferred embodiments of the invention

In cooperation with the attached drawings, the technical contents and detailed description of the present invention are described thereinafter according to the preferred embodiments, being not used to limit its executing scope. Any equivalent technical variation and modification made according to appended claims is all covered by the claims claimed by the present invention.

Reference will now be made to the drawing figures to describe the present invention in detail.

As foregoing cites, the present application refers to an electrochemical machining electrode device for realizing a cooling slot in a surface of a component or body, preferably a blade, to be cooled of a gas turbine assembly. Even if not represented in the enclosed drawings, the skilled person well knows that a gas turbine assembly comprises a compressor, a combustor assembly and a turbine. The compressor and the turbine extend along a main axis. The combustor assembly may be a can combustor that may involve sequential combustion or a single-stage combustion. As known, this gas turbine comprises a plurality of can combustors arranged as a ring around the axis, or a single combustor with passages to guide the combustion gas to the turbine entry. The compressor of the gas turbine provides a compressed airflow, which is added with fuel and burned in each can combustors. Part of the airflow delivered by the compressor is separated from the main flow and supplied to the combustor assembly and to the turbine section for the purpose of cooling. In particular, the turbine comprises rotating and statoric blades that have to be cooled due to the very high temperature of the hot gas. For cooling these components it is important to realize a film of cooling air on the surface in contact with the hot gas. This film of cooling air is realized providing the surface with a recessed portion in form of a slot that is fed by cooling air passing inside the component.

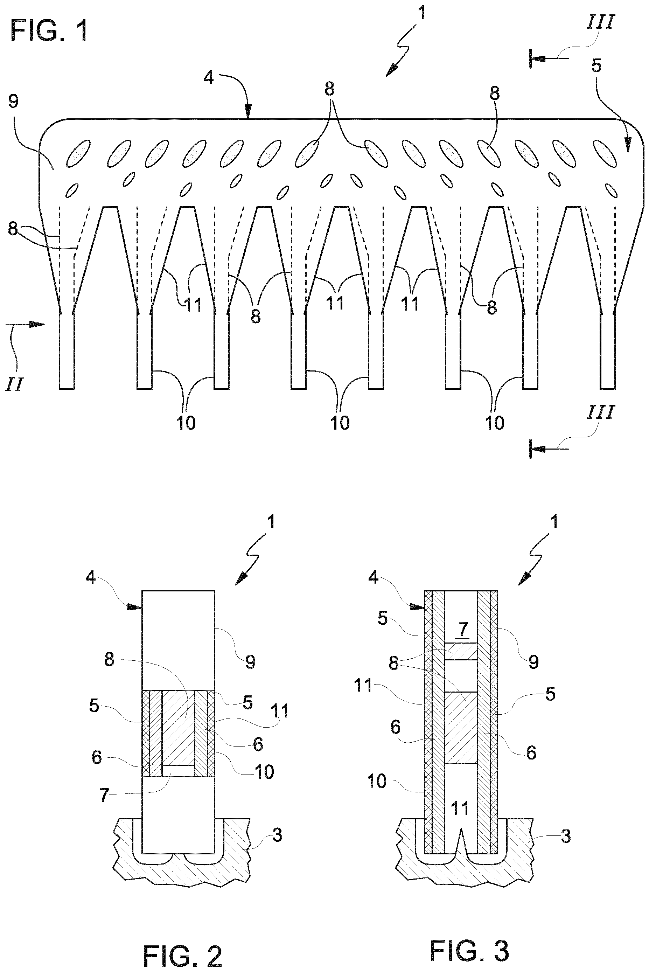

Figure 1 is a schematic front view of an example of an electrochemical machining electrode device (in the following ECM device) according to the present invention for realizing the above slot in a gas turbine component, for instance a blade. According to this example of figure 1, the ECM device is a sandwich comb-shaped body (essentially a 2-dimensional body) comprising a base 9 to be coupled to an electrolyte source and to an electrical current generator, which uses the inner electrically conducting plates 6 of the ECM device as cathode and the workpiece 3 as anode, and a plurality of tubes 10 connected to the base 9 to be directed against the blade surface 3. For allowing the electrolyte to enter the device 1 by the base 9 and to leave the device 1 by the tubes 10 and the laterally open edges of the tapered portions 11, the base 9 is open and the tubes 10 are hollow for forming a plurality of passing channels 11. As disclosed in figure 1, each tube 10 is connected to the base 9 within a tapered portion 11 with closed or partially open walls 8 so that the passing channel 11 for the electrolyte decreases from the base 9 to the tube 10.

Figures 2 and 3 are respectively a schematic side view of the device of figure 1 along the arrow II and a schematic sectional view of the device of figure 1 along the line III-III. These figures disclose the layers forming the device 1. As shown, the device 1 comprises two outer electrically non-conducting plates 5 and two inner electrically conducting plates 6 in direct contact with the two outer non-conducting plates 5. The two inner electrically conducting plates 6 are separated for forming a central gap 7 used to provide flow of fresh electrolyte to the surface 3 to be machined. Additionally, the inner electrically conducting plates 6 serve as a cathode providing current from an electrical current source to the surface 3 to be machined, which is used as anode and also connected to the electrical current source. The inner electrically conducting plates 6 are connected by bridge bodies 8 that may be pedestals and/or electrolyte flow guides configured for guiding the electrolyte flowing from the base 9 to the tubes 10 and to the laterally open edges of the tapered portions 11. Each tube 10 comprises of an outer electrically non-conducting tube 5 in direct contact with an inner electrically conducting tube 6. Each inner electrically conducting tube 6 additionally serves as a cathode providing current via the inner electrically conducting plates 6 from an electrical current source to the surface 3 to be machined, which is used as anode and also connected to the electrical current source. As disclosed in figure 2, the base 9 is laterally closed whereas the tapered portions 11 connecting the base 9 to the tubes 11 are laterally open. Alternatively, only the portion of the base 9 adjacent to the electrolyte inlet is laterally closed, while a portion of the base adjacent to the tapered portions 11 is laterally open.

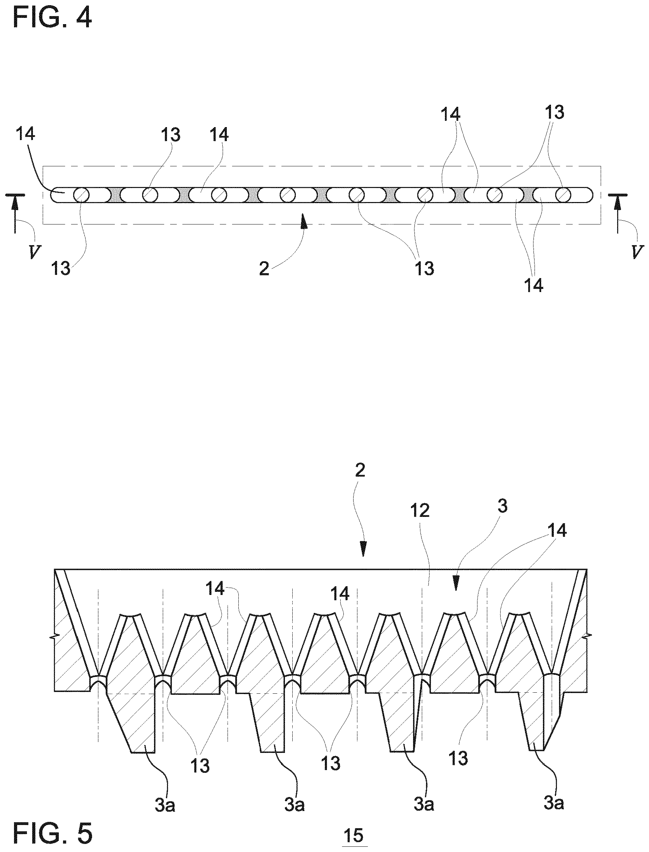

Figure 4 is a schematic plan view of the cooling slot 2 obtained by using device of figure 1. The slot comprises a recessed portion 12 slot-shaped, a plurality of channels or round holes 13 connecting the recessed portion to a cooling air source 15 inside the blade and conic portions 14 acting as diffusors and connecting the channels or holes to the recessed portion. Note that Figure 5 shows turbulators 3a, e.g. ribs or pedestals, on the blade's internal surface which can be present to enhance heat transfer from the blade's internal surface to the cooling air passing along the surface; when such turbulators 3a are present, the machining depth needs to be sufficiently large to machine the holes or channels also going through the turbulators.

Although the invention has been explained in relation to its preferred embodiment(s) as mentioned above, it is to be understood that many other possible modifications and variations can be made within the scope of the appended claims covering such modifications and variations.

## Claims

1. An electrochemical machining electrode device (1) for realizing a cooling slot (2) in a surface (3) of a body (3), preferably a blade, to be cooled of a gas turbine assembly; the device (1) being a sandwich body (4) comprising:
- two outer electrically non-conducting plates (5);
- two inner electrically conducting plates (6) in direct contact with the two outer non-conducting plates (5); the two inner electrically conducting plates (6) being separated for forming a central gap (7) used to provide flow of fresh electrolyte to the surface (3) to be machined; wherein the inner electrically conducting plates (6) serve as a cathode providing current from an electrical current source to the surface (3) to be machined, which is used as anode and also connected to the electrical current source;
- a plurality of bridge bodies (8) connecting the two inner electrically conducting plates (6);
**characterized in that**
the device (1) is comb-shaped comprising a base (9) and a plurality of tubes (10) connected to the base (9); the base (9) being open and the tubes (10) are hollow each comprising of an outer electrically non-conducting tube (5) in direct contact with an inner electrically conducting tube (6) for forming a plurality of passing channels (11) allowing the electrolyte to enter the device (1) by the base (9) and to leave the device (1) by the tubes (10); each inner electrically conducting tube (6) additionally serves as a cathode providing current via the inner electrically conducting plates (6) from an electrical current source to the surface (3) to be machined, which is used as anode and also connected to the electrical current source.

2. Device as claimed in claim 1, wherein each tube (10) is connected to the base by a tapered portion (11) so that the passing channel (11) for the electrolyte decreases from the base (9) to the tube (10) and the tapered portions (11) are laterally open.

3. Device as claimed in claim 2, wherein the base (9) is laterally closed.

4. Device as claimed in any one of the foregoing claims, wherein the bridge bodies (8) are pedestals and/or electrolyte flow guides configured for guiding the electrolyte flowing from the base (9) to the tubes (10).

5. Device as claimed in any one of claims 2 or 3, wherein the bridge bodies (8) are pedestals and/or electrolyte flow guides configured for guiding the electrolyte flowing from the base (9) to the tubes (10) and to the laterally open edges of the tapered portions 11.

6. Device as claimed in any one of the foregoing claims, wherein the outer plates (5) are made of glass or plastic.

7. Device as claimed in any one of the foregoing claims, wherein the inner plates (6) are made by stainless steel or copper or metal.

8. Device as claimed in any one of the foregoing claims, wherein bridge bodies (8) and the inner plates (6) are made of the same conducting material.

9. Device as claimed in any one of the foregoing claims from 1 to 7, wherein bridge bodies (8) and the inner plates (6) are made of different conducting materials.

10. Device as claimed in any one of the foregoing claims from 1 to 7, wherein bridge bodies (8) are made of a non-conducting material.

11. Method for realizing a cooling slot in a surface of a body, preferably a blade, to be cooled of a gas turbine assembly; the method comprising the steps of:
a) providing a body of a gas turbine assembly;
b) providing a device (1) as claimed in any one of the foregoing claims;
c) coupling the device (1) to the body;
d) connecting the inner electrically conducting plates (6) of the device to an electrical current generator, which uses the plates as cathode and the body as anode, and flowing the electrolyte inside the device towards the body;
e) lowering the device inside the slot.

## Patentansprüche

1. Elektrochemische Bearbeitungselektrodenvorrichtung (1) zur Herstellung eines Kühlschlitzes (2) in einer zu kühlenden Oberfläche (3) eines Körpers (3), vorzugsweise einer Schaufel, einer Gasturbinenanordnung; wobei die Vorrichtung (1) ein Sandwich-Körper (4) ist, der umfasst:
- zwei äußere elektrisch nicht leitende Platten (5);
- zwei innere elektrisch leitende Platten (6) in direktem Kontakt mit den zwei äußeren nicht leitenden Patten (5); wobei die zwei inneren elektrisch leitenden Platten (6) zum Bilden einer mittleren Lücke (7) getrennt sind, die zum Bereitstellen von Strömung frischen Elektrolyts für die zu bearbeitende Oberfläche (3) verwendet wird; wobei die inneren elektrisch leitenden Platten (6) als eine Kathode dienen, die Strom von einer elektrischen Stromquelle für die zu bearbeitende Oberfläche (3) bereitstellt, die als Anode verwendet wird und auch mit der elektrischen Stromquelle verbunden ist;
- eine Vielzahl von Brückenkörpern (8), welche die zwei inneren elektrisch leitenden Platten (6) verbinden;
**dadurch gekennzeichnet, dass**
die Vorrichtung (1) kammförmig ist und eine Basis (9) und eine Vielzahl von Rohren (10) umfasst, die mit der Basis (9) verbunden sind; wobei die Basis (9) offen ist und die Rohre (10) hohl sind und jeweils aus einem äußeren elektrisch nicht leitenden Rohr (5) in direktem Kontakt mit einem inneren elektrisch leitenden Rohr (6) bestehen, um eine Vielzahl von Durchgangskanälen (11) zu bilden, die es dem Elektrolyten erlauben, durch die Basis (9) in die Vorrichtung (1) einzutreten und die Vorrichtung (1) durch die Rohre (10) zu verlassen; wobei jedes innere elektrisch leitenden Rohr (6) zusätzlich als eine Kathode dient, die Strom über die inneren elektrisch leitenden Platten (6) von einer elektrischen Stromquelle für die zu bearbeitende Oberfläche (3) bereitstellt, die als Anode verwendet wird und auch mit der elektrischen Stromquelle verbunden ist.

2. Vorrichtung nach Anspruch 1, wobei jedes Rohr (10) durch einen kegeligen Abschnitt (11) mit der Basis verbunden ist, derart dass der Durchgangskanal (11) für den Elektrolyt von der Basis (9) zum Rohr (10) abnimmt und die kegeligen Abschnitte (11) seitlich offen sind.

3. Vorrichtung nach Anspruch 2, wobei die Basis (9) seitlich geschlossen ist.

4. Vorrichtung nach einem der vorhergehenden Ansprüche, wobei die Brückenkörper (8) Sockel und/oder Elektrolytströmungsführungen sind, die zum Führen des Elektrolyten ausgestaltet sind, der von der Basis (9) zu den Rohren (10) strömt.

5. Vorrichtung nach einem der Ansprüche 2 oder 3, wobei die Brückenkörper (8) Sockel und/oder Elektrolytströmungsführungen sind, die zum Führen des Elektrolyten ausgestaltet sind, der von der Basis (9) zu den Rohren (10) und zu den seitlich offenen Rändern der kegeligen Abschnitte (11) strömt.

6. Vorrichtung nach einem der vorhergehenden Ansprüche, wobei die äußeren Platten (5) aus Glas oder Kunststoff bestehen.

7. Vorrichtung nach einem der vorhergehenden Ansprüche, wobei die inneren Platten (6) aus Edelstahl oder Kupfer oder Metall bestehen.

8. Vorrichtung nach einem der vorhergehenden Ansprüche, wobei Brückenkörper (8) und die inneren Platten (6) aus dem gleichen leitenden Material bestehen.

9. Vorrichtung nach einem der vorhergehenden Ansprüche von 1 bis 7, wobei Brückenkörper (8) und die inneren Platten (6) aus unterschiedlichen leitenden Materialien bestehen.

10. Vorrichtung nach einem der vorhergehenden Ansprüche von 1 bis 7, wobei Brückenkörper (8) aus einem nicht leitenden Material bestehen.

11. Verfahren zur Herstellung eines Kühlschlitzes in einer zu kühlenden Oberfläche eines Körpers, vorzugsweise einer Schaufel, einer Gasturbinenanordnung; wobei das Verfahren die folgenden Schritte umfasst:
a) Bereitstellen eines Körpers einer Gasturbinenanordnung;
b) Bereitstellen einer Vorrichtung (1) nach einem der vorhergehenden Ansprüche;
c) Koppeln der Vorrichtung (1) an den Körper;
d) Verbinden der inneren elektrisch leitenden Platten (6) der Vorrichtung mit einem elektrischen Stromgenerator, der die Platten als Kathode und den Körper als Anode verwendet, und Strömen des Elektrolyten im Inneren der Vorrichtung hin zu dem Körper;
e) Absenken der Vorrichtung im Inneren des Schlitzes.

## Revendications

1. Dispositif d'usinage électrochimique à électrode (1) pour réaliser une fente de refroidissement (2) sur une surface (3) d'un corps (3), de préférence une pale, à refroidir d'un ensemble turbine à gaz ; le dispositif (1) étant un corps en sandwich (4) comprenant :
- deux plaques externes électriquement non conductrices (5) ;
- deux plaques internes électriquement conductrices (6) en contact direct avec les deux plaques externes non conductrices (5) ; les deux plaques internes électriquement conductrices (6) étant séparées afin de former un espace central (7) utilisé pour fournir un flux d'électrolyte neuf à la surface (3) à usiner ; dans lequel les plaques internes électriquement conductrices (6) servent de cathode qui fournit un courant depuis une source de courant électrique vers la surface (3) à usiner, qui est utilisée comme anode et reliée à la source de courant électrique ;
- une pluralité de corps en pont (8) qui relient les deux plaques internes électriquement conductrices (6) ;
**caractérisé en ce que**
le dispositif (1) est en forme de peigne et comprend une base (9) et une pluralité de tubes (10) reliés à la base (9) ; la base (9) étant ouverte et les tubes (10) étant creux et comprenant chacun un tube externe électriquement non conducteur (5) en contact direct avec un tube interne électriquement conducteur (6) afin de former une pluralité de canaux de passage (11) qui permettent à l'électrolyte de pénétrer dans le dispositif (1) par la base (9) et de quitter le dispositif (1) par les tubes (10) ; chaque tube interne électriquement conducteur (6) servant en outre de cathode qui fournit du courant via les plaques internes électriquement conductrices (6) depuis une source de courant électrique vers la surface (3) à usiner, qui est utilisée comme anode et également reliée à la source de courant électrique.

2. Dispositif selon la revendication 1, dans lequel chaque tube (10) est relié à la base par une partie effilée (11) de sorte que le canal de passage (11) destiné à l'électrolyte diminue de la base (9) vers le tube (10) et les parties effilées (11) soient latéralement ouvertes.

3. Dispositif selon la revendication 2, dans lequel la base (9) est latéralement fermée.

4. Dispositif selon l'une quelconque des revendications précédentes, dans lequel les corps en pont (8) sont des socles et/ou des guides de flux d'électrolyte configurés pour guider l'électrolyte qui circule de la base (9) vers les tubes (10).

5. Dispositif selon l'une quelconque des revendications 2 ou 3, dans lequel les corps en pont (8) sont des socles et/ou des guides de flux d'électrolyte configurés pour guider l'électrolyte qui circule de la base (9) vers les tubes (10) et vers les bords latéralement ouverts des parties effilées (11).

6. Dispositif selon l'une quelconque des revendications précédentes, dans lequel les plaques externes (5) sont composées de verre ou de plastique.

7. Dispositif selon l'une quelconque des revendications précédentes, dans lequel les plaques internes (6) sont composées d'acier inoxydable ou de cuivre ou de métal.

8. Dispositif selon l'une quelconque des revendications précédentes, dans lequel les corps en pont (8) et les plaques internes (6) sont composés du même matériau conducteur.

9. Dispositif selon l'une quelconque des revendications 1 à 7, dans lequel les corps en pont (8) et les plaques internes (6) sont composés de matériaux conducteurs différents.

10. Dispositif selon l'une quelconque des revendications 1 à 7, dans lequel les corps en pont (8) sont composés d'un matériau non conducteur.

11. Procédé de réalisation d'une fente de refroidissement sur une surface d'un corps, de préférence une pale, à refroidir d'un ensemble turbine à gaz ; le procédé comprenant les étapes consistant à :
a) prévoir un corps d'un ensemble turbine à gaz ;
b) prévoir un dispositif (1) selon l'une quelconque des revendications précédentes ;
c) coupler le dispositif (1) au corps ;
d) relier les plaques internes électriquement conductrices (6) du dispositif à un générateur de courant électrique, qui utilise les plaques comme cathode et le corps comme anode, et faire circuler l'électrolyte à l'intérieur du dispositif vers le corps ;
e) abaisser le dispositif à l'intérieur de la fente.
